Europäisches Patentamt

European Patent Office

Office européen des brevets

(11) Publication number: **0 265 018 B1**

# EUROPEAN PATENT SPECIFICATION

(45) Date of publication of patent specification: **23.12.92**   (51) Int. Cl.⁵: **C01B 35/10**, C01B 33/34, C01B 33/20

(21) Application number: **87202003.7**

(22) Date of filing: **19.10.87**

(54) **Bonded zeolites and process for preparing them.**

(30) Priority: **22.10.86 IT 2207586**

(43) Date of publication of application:
**27.04.88 Bulletin 88/17**

(45) Publication of the grant of the patent:
**23.12.92 Bulletin 92/52**

(84) Designated Contracting States:
**AT BE CH DE ES FR GB GR LI LU NL SE**

(56) References cited:
**EP-A- 0 200 260
DE-A- 3 401 485
US-A- 3 296 151
US-A- 4 061 724**

(73) Proprietor: **ENIRICERCHE S.p.A.**
**Corso Venezia 16**
**I-20121 Milan(IT)**

Proprietor: **SNAMPROGETTI S.p.A.**
**Corso Venezia 16**
**I-20121 Milan(IT)**

Proprietor: **ENICHEM SYNTHESIS S.p.A.**
**Via Ruggero Settimo 55**

**I-90139 Palermo(IT)**

(72) Inventor: **Bellussi, Guiseppe**
**Via A. Scopo 44**
**I-29100 Piacenza(IT)**
Inventor: **Buonomo, Franco**
**Via Trento 4**
**I-29007 San Donato Milanese Milan(IT)**
Inventor: **Esposito, Antonio**
**Via Liberta 70**
**I-20097 San Donato Milanese Milan(IT)**
Inventor: **Clerici, MarioGabriele**
**Via Europe 34**
**I-20059 San Donato Milanese Milan(IT)**
Inventor: **Romano, Ugo**
**Via Fermi 12**
**I-20059 Vimercate Milan(IT)**

(74) Representative: **Roggero, Sergio et al**
**Ing. Barzanò & Zanardo Milano S.p.A. Via**
**Borgonuovo 10**
**I-20121 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

This invention relates to a process for preparing bonded zeolites, and, more particularly, zeolites bonded with oligomeric silica.

Bonded zeolites are known to have an improved mechanical resistance, which is useful for exploitation in various industrial processes.

The production methods of the prior art, however, are impaired by the defect that the zeolite cavities are partially occluded, whereby their activity is compromised.

EP-A-0 200 260 discloses a process for preparing a titanium silicalite bonded with oligomeric silica, in which the molar ratio of oligomeric silica to titanium silicalite is from 0,05 to 0,11: said bonded zeolite is prepared by hydrolyzing a tetraalkyl-orthosilicate in an aqueous solution of a tetraalkylammonium hydroxide at a temperature from ambient to 200°C and for a time of from 0,2 hour to 10 hours, whereupon titanium silicalite crystals are slurried in the liquid phase thus obtained, and the resultant slurry is rapidly dried.

With a view to overcoming the defects of the prior art approaches referred to above, the present invention provides a process for preparing zeolites bonded with oligomeric silica, comprising the steps of:

(a) mixing an aqueous slurry of:

a zeolite selected from:

- calcined and anhydrous zeolites, facultatively exchanged with ammonium ions;
- non-calcined damp zeolites prepared hydrothermally and containing ammonium-or alkylammonium counter-cations, in the facultative presence of ammonium- or alkylammonium hydroxides, and having a pore diameter of from 0,5 nm to 1,3 nm,

with an aqueous solution of oligomeric silica and an alkylammonium hydroxide, the percentage by weight of the zeolite in said slurry being from 20% to 50%, the molar ratio of oligomeric silica to alkylammonium hydroxide in said solution being from 0,05 to 0,2, and the molar ratio of the oligomeric silica to water being from 0,025 to 0,0125, and

(b) rapidly drying the resultant mixture,

characterized in that a zeolite based on:

1) Si, Al and B;
2) Si, Al and Ti;
3) Si, Ti and Fe;
4) Si and Ti;
5) Si and B;
6) Zeolite ZSM-5;
7) Zeolite ZSM-11, and
8) Zeolite T,

is used, in which the weight ratio of the oligomeric silica to the zeolite in the mixture resultant from stage (a) is from 5:95 to 20:80, the 5:95 to 10:90 range being excluded in the case of a Si- and Ti-based zeolite.

The alkylammonium hydroxide is selected among those having a C1-C5 alkyl: preferred is tetrapropylammonium hydroxide, and among the tetraalkyl orthosilicates tetraethylorthosilicate is preferred.

The aqueous solution of silica and alkylammonium hydroxide is prepared by hydrolyzing a tetraalkyl orthosilicate in an aqueous solution of an alkylammonium hydroxide at a temperature of from 2°C to 120°C for a time of from 0,2 hour to 24 hours.

Zeolites having a pore size of from 0,5 nm to 1,3 nm have proven particularly suitable for the process as outlined above.

The zeolite crystals, under the process conditions specified in the foregoing, are encaged with each other by Si-O-Si bridges and are in the form of micropsheres having a diameter of from 5 $\mu$m to 1 mm.

According to a particular embodiment of the process defined hereinabove, a zeolite, based on Si, Al and B is used, which has, in its anhydrous and calcined state, the following molar composition:

$$pHAlO_2 . qB_2O_3 . SiO_2 \qquad (1)$$

in which p is from 0,034 to 0,0050, and q is from 0,1 to 0,005, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HAlO_2$ being at least partially replaceable by cations, said zeolite (1) having, in its powdered state an X-ray diffraction spectrum with the following characteristics:

| Interplanar distance, nm | Rel.Intensity |
|---|---|
| 1,112 ± 0,01 | very strong |
| 0,998 ± 0,01 | strong |
| 0,974 ± 0,01 | medium |
| 0,634 ± 0,007 | medium to weak |
| 0,597 ± 0,007 | medium to weak |
| 0,424 ± 0,005 | medium to weak |
| 0,384 ± 0,004 | strong |
| 0,381 ± 0,004 | strong |
| 0,373 ± 0,004 | strong |
| 0,371 ± 0,004 | strong |
| 0,363 ± 0,004 | medium |
| 0,304 ± 0,002 | medium to weak |
| 0,297 ± 0,002 | medium to weak |

and an Infra Red spectrum exhibiting all the following bands:

| Wave number, $cm^{-1}$ | Rel.Intensity |
|---|---|
| 1220 to 1230 | weak |
| 1080 to 1110 | strong |
| 890 to 920 | medium to weak |
| 795 to 805 | medium to weak |
| 550 to 560 | medium |
| 450 to 470 | medium to strong. |

According to another embodiment of the process defined hereinabove, a zeolite, based on Si, Al and Ti is used, which has, in its anhydrous and calcined state, the following molar composition:

$$pHAlO_2 . qTiO_2 . SiO_2 \qquad (2)$$

in which $p$ is up to 0,050, and $q$ is up to 0,025, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HAlO_2$ being at least partially replaceable by cations, said zeolite (2) having, in its powdered state an X-ray diffraction spectrum with the following characteristics:

3

| Interplanar distance, nm | Rel.Intensity |
|---|---|
| $1,114 \pm 0,01$ | very strong |
| $0,999 \pm 0,01$ | strong |
| $0,974 \pm 0,01$ | medium |
| $0,636 \pm 0,007$ | medium to weak |
| $0,599 \pm 0,007$ | medium to weak |
| $0,426 \pm 0,005$ | medium to weak |
| $0,386 \pm 0,004$ | strong |
| $0,382 \pm 0,004$ | strong |
| $0,375 \pm 0,004$ | strong |
| $0,372 \pm 0,004$ | strong |
| $0,365 \pm 0,004$ | medium |
| $0,305 \pm 0,002$ | medium to weak |
| $0,299 \pm 0,002$ | medium to weak |

and an Infra Red spectrum exhibiting all the following bands:

| Wave number, $cm^{-1}$ | Rel.Intensity |
|---|---|
| 1220 to 1230 | weak |
| 1080 to 1110 | strong |
| 960 to 975 | medium to weak |
| 795 to 805 | medium to weak |
| 550 to 560 | medium |
| 450 to 470 | medium to strong. |

According to a further embodiment of the process defined hereinabove, a zeolite, based on Si and Ti is used, which has, in its anhydrous and calcined state, the following molar composition:

$$xTiO_2 \cdot (1-x) \, SiO_2 \qquad (3)$$

wherein x is from 0,0005 to 0,004, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%.

According to yet another embodiment of the process defined hereinabove, a zeolite, based on Si, Ti and Fe is used, which has, in its anhydrous and calcined state, the following molar composition:

$$pHFeO_2 \cdot qTiO_2 \cdot SiO_2 \qquad (4)$$

in which p is up to 0,050, and q is up to 0,025, with the proviso that, for an ammonium-base containing zeolite hydrate, the ratio of the weight of the water to the sum of the weights of the water, the ammonium ion or the alkylammonium base and the calcined and anhydrous zeolite (4) is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HFeO_2$ being at least partially replaceable by cations, said zeolite (1) having, in its powdered state an X-ray diffraction spectrum with the following characteristics:

4

| Interplanar distance, nm | Rel.Intensity |
|---|---|
| 1,114 ± 0,01 | very strong |
| 0,999 ± 0,01 | strong |
| 0,974 ± 0,01 | medium |
| 0,636 ± 0,007 | medium to weak |
| 0,599 ± 0,007 | medium to weak |
| 0,426 ± 0,005 | medium to weak |
| 0,386 ± 0,004 | strong |
| 0,382 ± 0,004 | strong |
| 0,375 ± 0,004 | strong |
| 0,372 ± 0,004 | strong |
| 0,365 ± 0,004 | medium |
| 0,305 ± 0,002 | medium to weak |
| 0,299 ± 0,002 | medium to weak |

and an Infra Red spectrum exhibiting all the following bands:

| Wave number, $cm^{-1}$ | Rel.Intensity |
|---|---|
| 1220 to 1230 | weak |
| 1080 to 1110 | strong |
| 960 to 975 | medium to weak |
| 795 to 805 | medium to weak |
| 550 to 560 | medium |
| 450 to 470 | medium to strong. |

In summation, a distinctive feature of the zeolites bonded with oligomeric silica, prepared by the process of the present invention, is that the crystals of a zeolite based on:

1) Si, Al and B;
2) Si, Al and Ti;
3) Si, Ti and Fe;
4) Si and Ti;
5) Si and B;
6) Zeolite ZSM-5;
7) Zeolite ZSM-11, and
8) Zeolite T,

are encaged with each other by Si-O-Si bridges and are in the form of microspheres having a diameter of from 5 $\mu$m to 1 mm, the weight ratio of the oligomeric silica to the zeolite concerned in the mixture of an aqueous slurry of said zeolite with an aqueous solution of oligomeric silica and alkylammonium hydroxide used for their preparation being from 5:95 to 20:80, the 5:95 to 10:90 range being excluded in the case of an Si- and Ti-based zeolite.

Zeolites 1, 2, 3, 4, 5, 6, 7 and 8 are prepared by means of the following procedures:

Zeolite 1:
– – – – –

Under hydrothermal conditions a silicon derivative, a boron derivative, an aluminum derivative and a nitrogenous organic base are reacted, with an $SiO_2/Al_2O_3$ molar ratio of the reactants larger than 100, preferably comprised within the range of from 300 to 400, an $SiO_2/B_2O_3$ molar ratio of the reactants comprised within the range of from 5 to 50, an $H_2O/SiO_2$ molar ratio of the reactants preferably comprised within the range of from 20 to 40, possibly in the presence of one or more alkali- and or alkali-earth-metal salts and/or hydroxides, with a molar $M/SiO_2$ ratio (wherein M is the alkali- and/or alkali-earth-metal cation) of the reactants smaller than 0.1, preferably smaller than 0.01, or equal to zero.

In the empirical formula of the material, aluminum has been shown in $HAlO_2$ form, to underline that the material is in the $H^+$ form. When the ratios between the various reactants are discussed, for aluminum the $Al_2O_3$ form is used, in that it is the most usual.

The silicon derivative is selected from silica gel, silica sol and alkyl-silicates, among which tetraethyl-silicate is the most preferred; the boron derivative is selected from boric acid and the organic derivatives of boron, such as, e.g., alkyl-borates, preferably triethyl-borate; the aluminum derivative is selected from its salts, such as, e.g., the halides and the hydroxides, and its organic derivatives, such as, e.g., the alkyl aluminates, preferably isopropyl-aluminate.

The nitrogenous organic base can be an alkyl-ammonium hydroxide, preferably tetrapropyl-ammonium hydroxide.

In case tetrapropyl-ammonium hydroxide is used, the $TPA^+/SiO_2$ ratio (wherein TPA = tetrapropyl-ammonium) of the reactants is comprised within the range of from 0.1 to 1, preferably of from 0.2 to 0.4.

The reactants are reacted by operating at a temperature comprised within the range of from 100 to 200°C, preferably comprised within the range of from 160 to 180°C, at a pH comprised within the range of from 9 to 14, preferably of from 10 to 12, and for a time ranging from 1 hour to 5 days, preferably of from 3 hours to 10 hours.

Zeolite 2:
_ _ _ _

Under hydrothermal conditions a silicon derivative, a titanium derivative, an aluminum derivative and a nitrogenous organic base are reacted, with an $SiO_2/Al_2O_3$ molar ratio of the reactants larger than 100, preferably comprised within the range of from 300 to 400, an $SiO_2/TiO_2$ molar ratio of the reactants larger than 5, preferably comprised within the range of from 15 to 25, an $H_2O/SiO_2$ molar ratio of the reactants preferably comprised within the range of from 10 to 100, more preferably within the range of from 30 to 50, possibly in the presence of one or more alkali- and or alkali-earth-metal salts and/or hydroxides, with a molar $M/SiO_2$ ratio (wherein M is the alkali- and/or alkali-earth-metal cation) of the reactants smaller than 0.1, preferably smaller than 0.01, or equal to zero.

In the empirical formula of the material, aluminum has been shown in the $HAlO_2$ form, to underline that the material is in the $H^+$ form. When the ratios between the various reactants are discussed, for aluminum the $Al_2O_3$ form is used, in that it is the most usual.

The silicon derivative is selected from silica gel, silica sol and alkyl-silicates, among which tetraethyl-silicate is the most preferred; the titanium derivative is selected from the salts, such as, e.g., the halides, and the organic derivatives of titanium, such as, e.g., alkyl-titanates, preferably triethyl-titanate; the aluminum derivative is selected from its salts, such as, e.g., the halides and the hydroxides, and its organic derivatives, such as, e.g., the alkyl aluminates, preferably isopropyl-aluminate.

The nitrogenous organic base can be an alkyl-ammonium hydroxide, preferably tetrapropyl-ammonium hydroxide.

In case tetrapropyl-ammonium hydroxide is used, the $TPA^+/SiO_2$ ratio (wherein TPA = tetrapropyl-ammonium) of the reactants is comprised within the range of from 0.1 to 1, preferably of from 0.2 to 0.4.

The reactants are reacted by operating at a temperature comprised within the range of from 100 to 200°C, preferably comprised within the range of from 160 to 180°C, at a pH comprised within the range of from 9 to 14, preferably of from 10 to 12, and for a time ranging from 1 hour to 5 days, preferably of from 3 hours to 10 hours.

Zeolite 3:
_ _ _ _

Under hydrothermal conditions a silicon derivative, a titanium derivative, an iron derivative and a nitrogenous organic base are reacted, with an $SiO_2/Fe_2O_3$ molar ratio of the reactants larger than 50, preferably comprised within the range of from 150 to 600, an $SiO_2/TiO_2$ molar ratio of the reactants larger than 5, preferably comprised within the range of from 15 to 25, an $H_2O/SiO_2$ molar ratio of the reactants preferably comprised within the range of from 10 to 100, more preferably within the range of from 30 to 50, possibly in the presence of one or more alkali- and or alkali-earth-metal salts and/or hydroxides, with a molar $M/SiO_2$ ratio (wherein M is the alkali- and/or alkali-earth-metal cation) of the reactants smaller than 0.1, preferably smaller than 0.08, or equal to zero.

In the empirical formula of the material, iron has been shown in $HFeO_2$ form, to underline that the material is in $H^+$ form. When the ratios between the various reactants are discussed, for iron the $Fe_2O_3$ form is used, in that it is the most usual.

The silicon derivative is selected from silica gel, silica sol and alkyl-silicates, among which tetraethyl-silicate is the most preferred; the titanium derivative is selected from the salts, such as, e.g., the halides, and the organic derivatives of titanium, such as, e.g., alkyl-titanates, preferably tetraethyl-titanate; the aluminum derivative is selected from its salts, such as, e.g., the halides or the nitrates, the hydroxides, and the organic derivatives, such as, e.g., the alkoxides.

6

The nitrogenous organic base can be an alkyl-ammonium hydroxide, preferably tetrapropyl-ammonium hydroxide.

In case tetrapropyl-ammonium hydroxide is used, the $TPA^+/SiO_2$ ratio (wherein TPA = tetrapropyl-ammonium) of the reactants is comprised within the range of from 0.1 to 1, preferably of from 0.2 to 0.4.

The reactants are reacted by operating at a temperature comprised within the range of from 100 to 200°C, preferably comprised within the range of from 160 to 180°C, at a pH comprised within the range of from 9 to 14, preferably of from 10 to 12, and for a time ranging from 1 hour to 5 days, preferably of from 3 hours to 10 hours.

Zeolite 4:

Preparation according to US-A-4,410,501.

Zeolites 5:

Zeolites based on Si and B of A, B, C and D type; preparations according to FR-A-2,429,182; and of the types disclosed in FR-A-2,526,414; and in EP-A-98,641: for their preparation, reference is made to the above cited patent literature.

Zeolite 6:

ZSM-5; preparation as disclosed by US-A-3,702,886 and Reissue US-A-29,948.

Zeolite 7:

ZSM-11; preparation according to US-A-3,709,979.

Zeolite 8:

T Zeolite; preparation according to DE-A-3,139,355.

The following Examples illustrate the specific preparations of some of the zeolites used, and some specific preparations of the zeolites with bonding agent.

Example 1: Zeolite 1

67.8 g of $Al(NO_3)_3.9H_2O$ is dissolved in 1,275 g of ethyl alcohol and to the so-obtained solution 2,819 g of tetraethyl-silicate is added, with stirring until a homogeneous and clear solution is obtained.

To a stainless-steel vessel 1,036 g of deionized water, 8,878 g of an aqueous solution at 15.5% by weight of tetrapropyl-ammonium ($TPA^+$) hydroxide and 167.5 g of boric acid powder are charged in the order shown, with stirring.

When all the acid has gone into solution, to this latter solution the previously obtained solution is added, and the mixture is stirred, while being heated at 60°C for approximately 4 hours, and anyway until the hydrolysis of the silicate is complete and the ethyl alcohol present is nearly completely removed. The molar composition of the reaction mixture is the following:

$SiO_2/Al_2O_3$ = 150;
$SiO_2/B_2O_3$ = 10;
$TPA^+/SiO_2$ = 0.5;
$H_2O/SiO_2$ = 35.

The so-obtained solution is charged to an autoclave equipped with stirring means, and is heated, under its autogenous pressure, at 170°C, for 4 hours. The discharged product is centrifuged, and the centrifuge cake is carefully dispersed in 70 litres of deionized water; the obtained suspension is centrifuged again, yielding a washed cake.

A portion of the obtained product is calcined in air for 5 hours at 550°C, and at the end it shows to be a zeolite having, in the anhydrous form, the following composition:

0.0098 $Al_2O_3$; 0.0108 $B_2O_3$; $SiO_2$.

Example 2: Zeolite 1 with Bonding Agent

The zeolite is prepared as disclosed in Example 1, then 219 g of tetraethyl-silicate is added, with vigorous stirring, to 234 g of aqueous solution of tetrapropyl-ammonium hydroxide at 12% by weight, and the reaction mixture is stirred for 1 hour at 60°C; then, 958 g of demineralized water is added to it, and stirring is continued for a further hour. A clear solution is thus obtained, inside which 875 g of the centrifuging cake of zeolites of Example 1, prepared as above said, containing 9% by weight of TPA[+], 26% by weight of water and 65% by weight of zeolite 1 is added.

The milky suspension resulting from the dispersion is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 µm.

The atomized product is charged to a muffle under a $N_2$ atmosphere, and is heated up to 550°C. After a 2-hour stay at that temperature under $N_2$, the atmosphere is gradually turned from $N_2$ to air, and the product is left standing a further two hours at 550°C in air.

The obtained product has the following molar composition:

$0.0088 \ Al_2O_3$; $0.0097 \ B_2O_3$; $SiO_2$.

Example 3: Zeolite 2

27 g of aluminum isopropoxide is dissolved in 5,400 g of solution at 18.7% by weight of tetrapropyl-ammonium hydroxide.

Separately, 230 g of tetraethyl-orthotitanate is dissolved in 4,160 g of tetraethyl-silicate, and this solution is added to the previous one, with stirring.

The resulting mixture is heated up to 50-60°C, always with stirring, until a single-phase solution is obtained; then, 10,000 cc of water is added.

The so-obtained solution is charged to ah autoclave and is heated, under its autogenous pressure, at 170°C, for 4 hours.

The product discharged from the autoclave is centrifuged and washed twice by re-dispersion and centrifugation. A portion of the washed centrifuge cake is calcined in air for 5 hours at 550°C, and at the end it shows to be a zeolite having, in the anhydrous form, the following composition:

$0.0081 \ Al_2O_3$; $0.0250 \ TiO_2$ ; $SiO_2$.

Example 4: Zeolite 2 with Bonding Agent

The zeolite is prepared as in Example 3, then 320 g of of tetraethyl-silicate is added with vigorous stirring to 340 g of an aqueous solution of tetrapropyl-ammonium hydroxide at 12% by weight, and the resulting mixture is stirred 1 hour at 60°C; then, 1,400g of demineralized water is added, and the solution is kept stirred a further hour.

A clear solution is so obtained, into which 1,280 g is carefully dispersed of the washed centrifugation cake of zeolite 2, prepared as disclosed above, containing 9% by weight of TPA[+] and 26% by weight of water, and 65% of zeolite 2.

The milky suspension resulting from the dispersion is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 µm.

The atomized product is charged to a muffle under a $N_2$ atmosphere and is heated up to 550°C. After a 2-hour stay at that temperature, the atmosphere is gradually turned from $N_2$ to air, and the product is left standing a further two hours at 550°C in air.

The obtained product has the following molar composition:

$0.0073 \ Al_2O_3$; $0.0225 \ TiO_2$; $SiO_2$.

Example 5: Zeolite 3

This Example illustrates the preparation of titanium-ferrosilicalite.

20.2 g of $Fe(NO_3)_3.9H_2O$ is dissolved in water, and from the solution the hydroxide is precipitated by means of the addition of ammonium hydroxide. The precipitate is filtered off, and is washed by being re-dispersed in cold water and filtered until the filtrate turns to neutral. The damp hydroxide is then dissolved in 2,700 g of solution of tetrapropyl-ammonium hydroxide at 18.7% by weight.

Separately, 114 g of tetraethyl-orthotitanate is dissolved in 2,080 g of tetraethyl-orthosilicate, and this solution is added to the previous one, with stirring.

The resulting mixture is heated up to 50-60°C, always with stirring, until a single-phase solution is

8

obtained; then, 5,000 cc of water is added.

The so-obtained solution is charged to an autoclave and is heated, under its autogenous pressure, at 170°C, for 4 hours.

The product discharged from the autoclave is centrifuged and washed twice by re-dispersion and centrifugation. A portion of the washed centrifuge cake is calcined in air 4 hours at 550°C, and at the end it shows to be a zeolite having, in the anhydrous form, the following composition:

$0.0025 \ Fe_2O_3; 0.0208 \ TiO_2; SiO_2$.

Example 6: Zeolite 3 with Bonding Agent
‒ ‒ ‒ ‒ ‒ ‒ ‒ ‒ ‒ ‒ ‒ ‒ ‒ ‒ ‒ ‒ ‒ ‒ ‒

The zeolite is prepared as in Example 5, then 162 g of tetraethyl-silicate is added with vigorous stirring to 173 g of a solution of tetrapropyl-ammonium hydroxide at 12% by weight, and the resulting mixture is stirred 1 hour at 60°C; then, 709 g of demineralized water is added, and the solution is kept stirred a further hour.

A clear solution is so obtained, into which 720 g is carefully dispersed of the centrifugation cake of zeolite 3, prepared as disclosed above, containing 9% by weight of $TPA^+$, 26% by weight of water, and 65% by weight of zeolite 3.

The milky suspension resulting from the dispersion is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 $\mu$m.

The atomized product is charged to a muffle under an $N_2$ atmosphere and is heated up to 550°C. After a 2-hour stay at that temperature, the atmosphere is gradually turned from $N_2$ to air, and the product is left standing a further two hours at 550°C in air.

The obtained product has the following composition:

$0.0025 \ Fe_2O_3; 0.0188 \ TiO_2; SiO_2$.

Example 7: Zeolite 4
‒ ‒ ‒ ‒ ‒ ‒ ‒ ‒ ‒ ‒ ‒

A Titanium-Silicalite zeolite is prepared according to Example 1 of US patent No. 4,410,501:

4,160 g of tetraethyl-silicate is charged to a pyrex-glass beaker, and to it, 137 g of tetraethyl-titanate firstly, and then 7,310 g of an aqueous solution at 25% by weight of tetrapropyl-ammonium hydroxide are added with stirring. The reaction mixture is kept stirred approximately 5 hours at 80°C, and then demineralized water is added, up to the volume of approximately 14 litres. The obtained mixture is charged to an autoclave, and is left standing 10 days at 175°C under its autogenous pressure. The crystalline solid discharged from the autoclave is washed, dried and calcined at 550°C. The X-ray and I.R. analyses show that it is titanium-silicalite.

Example 8: Zeolite 4 with Bonding Agent
‒ ‒ ‒ ‒ ‒ ‒ ‒ ‒ ‒ ‒ ‒ ‒ ‒ ‒ ‒ ‒ ‒ ‒ ‒

The zeolite is prepared as in Example 7; then, 370 g of tetraethyl-silicate is added, with vigorous stirring, to 395 g of aqueous solution of tetrapropyl-ammonium hydroxide at 12% by weight, and the resulting mixture is stirred 1 hour at 60°C; then, 1,620 g of demineralized water is added, and stirring is continued a further hour.

A clear solution is so obtained, into which 1,000 g is carefully dispersed of the zeolite 4, obtained as disclosed in Example 7.

The milky suspension resulting from the dispersion is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 $\mu$m.

The atomized product is charged to a muffle under an $N_2$ atmosphere and is heated up to 550°C. After a 2-hour stay at that temperature, the atmosphere is gradually turned from $N_2$ to air, and the product is left standing a further two hours at 550°C in air.

The obtained product has the following chemical molar composition:

$0.02 \ TiO_2; SiO_2$.

Example 9: Zeolite 5 (Boralite C with Bonding Agent)
‒ ‒ ‒ ‒ ‒ ‒ ‒ ‒ ‒ ‒ ‒ ‒ ‒ ‒ ‒ ‒ ‒ ‒ ‒ ‒ ‒ ‒ ‒ ‒

Boralite-C zeolite is prepared as in Example 14 of FR patent No. 2,429,182; then, 562 g of tetraethyl-silicate is added with vigorous stirring to 600 g of solution of tetrapropyl-ammonium hydroxide at 12% by weight, and the resulting mixture is stirred 1 hour at 60°C; then, 2,460 g of demineralized water is added, and stirring is continued a further hour.

A clear solution is so obtained, into which 1,450 g is carefully dispersed of the previously prepared Boralite-C zeolite.

The milky suspension resulting from the dispersion is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 μm.

The atomized product is charged to a muffle under an $N_2$ atmosphere and is heated up to 550°C. After a 2-hour stay at that temperature under $N_2$, the atmosphere is gradually turned from $N_2$ to air, and the product is left standing a further two hours at 550°C in air.

The obtained product has the following composition:

$SiO_2/B_2O_3$ = 4.5.

Example 10: Zeolite 6
------------

To 6,090 g of an aqueous solution of tetrapropyl-ammonium hydroxide at 20%, 40 g of aluminum isopropoxide is added with stirring, and the obtained mixture is kept stirred, if necessary with a slight heating, up to complete dissolving.

To the obtained solution, 4,160 g of tetraethyl-silicate is added with stirring and possibly heating, until hydrolysis is complete, and a single-phase solution is obtained. Then, 9,500 g of demineralized water is added, and stirring is continued a further hour. The so-obtained solution, which has the following molar composition:

$SiO_2/Al_2O_3$ = 200;

$TPA^+/SiO_2$ = 0.3;

$H_2O/SiO_2$ = 40

is charged to a stainless-steel autoclave, and is heated, with stirring, to the temperature of 170°C, under its autogenous pressure, and is allowed to remain under these conditions for 4 hours; the autoclave is then cooled and discharged.

The obtained solution is centrifuged, and the solid is washed by re-dispersion and centrifugation. At the X-ray diffraction analysis of the powders, a portion of the calcined solid shows to be a ZSM-5-type zeolite.

Example 11: Zeolite 6 with Bonding Agent
------------------------

550 g of tetraethyl-silicate is added with stirring to 590 g of aqueous solution of tetrapropyl-ammonium hydroxide at 12%, and the resulting mixture is stirred 1 hour at 60°C; then, 2,400 g of demineralized water is added, and stirring is continued a further hour, while the solution is allowed to cool to approximately 25°C.

Into the so-obtained clear solution, 2,050 g is carefully dispersed of the washed centrifuge panel, prepared as disclosed in Example 10.

The panel contains approximately 70% by weight of zeolite. The resulting milky suspension is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 μm.

The atomizer is put under an $N_2$ atmosphere, the atmosphere is gradually turned from $N_2$ to air, and the product is left standing a further two hours at 550°C in air.

The obtained product has, in its calcined and anhydrous form, the following composition, expressed as molar ratio:

$SiO_2/Al_2O_3$ = 145.

Example 12: Zeolite 7
------------

To 4,050 g of an aqueous solution of tetrabutyl-ammonium hydroxide at 40%, 50 g of aluminum isopropoxide is added with stirring, and the obtained mixture is kept stirred, if necessary with a slight heating, up to complete dissolving; the obtained solution is then diluted with 4,050 g of demineralized water.

To the obtained solution, 5,200 g of tetraethyl-silicate is added with stirring and possibly heating, until hydrolysis is complete, and a single-phase solution is obtained. Then, 11,900 g of demineralized water is added, and stirring is continued a further hour. The so-obtained solution, which has the following molar composition:

$SiO_2/Al_2O_3$ = 203;
$TPA^+/SiO_2$ = 0.25;
$H_2O/SiO_2$ = 41

is charged to a stainless-steel autoclave, and is heated, with stirring, to the temperature of 170°C, under its autogenous pressure, and is left under these conditions for 15 hours; the autoclave is then cooled and discharged.

The obtained suspension is centrifuged, and the solid is washed by re-dispersion and centrifugation. At the X-ray diffraction analysis of the powders, a portion of the calcined solid shows to be a ZSM 11-type zeolite.

## Example 13: Zeolite 7 with Bonding Agent

690 g of tetraethyl-silicate is added with stirring to 740 g of an aqueous solution of tetrapropyl-ammonium hydroxide at 12%, and the resulting mixture is stirred 1 hour at 60°C; then, 3,000 g of demineralized water is added, and stirring is continued a further hour, while the solution is allowed to cool to approximately 25°C.

Into the clear solution so obtained, 2,550 g of the washed centrifuge panel, prepared as disclosed in Example 12, is carefully dispersed.

The panel contains approximately 70% by weight of zeolite. The resulting milky suspension is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 $\mu$m.

The atomizer is put under an $N_2$ atmosphere, the atmosphere is gradually turned from $N_2$ to air, and the product is left standing a further two hours at 550°C in air.

The obtained solid has, in its calcined and anhydrous form, the following molar composition:
$SiO_2/Al_2O_3$ = 145.

## Example 14: Zeolite 8

A T zeolite (D.W. Breck, Zeolite Molecular Sieves, J. Wiley & Sons Ed., 1974, 288) was synthetized according to the process as disclosed in DE patent No. 3,139,355, and was then agglomerated according to the process of the present invention.

To 4,500 g of colloidal silica containing 40% of $SiO_2$, 360 g was added, with vigorous stirring, of aqueous solution of tetramethylammonium hydroxide (25% by weight).

Separately, a solution was prepared by dissolving, in the order: 576 g of NaOH, 201 g of KOH and 474 g of $NaAlO_2$ (at 56% of $Al_2O_3$) in 8,300 g of demineralized water.

This solution was added to the preceding one with vigorous stirring, and stirring was maintained for approximately 2 hours.

The so-obtained reaction mixture, having the following composition, expressed as molar ratios:

$SiO_2/Al_2O_3$ = 11.5;
$K^+/SiO_2$ = 0.12;
$Na^+/SiO_2$ = 0.48;
$TMA^+/SiO_2$ = 0.03;
$H_2O/SiO_2$ = 20.8

was charged to a stainless-steel autoclave, was heated, to 190°C, and was left at this temperature, with stirring, under its autogenous pressure, for 2 hours; then, after cooling, the autoclave was discharged.

The obtained product was centrifuged, and the solid was washed by re-dispersions in water and centrifugations. A portion of the washed solid was calcined at 550°C for three hours; when it was then analysed by X-ray diffraction of the powders, it showed to be a well-crystallized T zeolite.

The washed, not calcined solid, was exchanged three times, according to the known techniques, so to exchange with $NH_4^+$ all the exchangeable cations. At the end of the last centrifugation, a damp cake containing 85% of solids was obtained.

## Example 15: Zeolite 8 with Bonding Agent

550 g of tetraethyl-silicate is added with stirring to 590 g of an aqueous solution of tetrapropyl-ammonium hydroxide at 12% and the resulting mixture is stirred 1 hour at 60°C; then, 2,400 g of demineralized water is added, and stirring is continued a further hour, while the solution is allowed to cool to approximately 25°C.

Into the clear solution so obtained, 1,250 g is carefully dispersed of the washed centrifuge panel, prepared as disclosed in Example 14.

The resulting milky suspension is fed to a spray-dryer (NIRO-ATOMIZER disk-atomizer; inlet air temperature 300°C; outlet air temperature 120°C; chamber diameter 1.5 m), compact microspheres being obtained, which have an average diameter close to 20 $\mu$m.

The atomizer is put under an $N_2$ atmosphere, the atmosphere is gradually turned from $N_2$ to air, and the product is left standing a further two hours at 550°C in air.

## Claims
## Claims for the following Contracting States : AT, BE, CH, DE, FR, GB, GR, IT, LI, LU, NL, SE

1. A process for preparing zeolites bonded with oligomeric silica, comprising the steps of:
   (a) mixing an aqueous slurry of:
   a zeolite selected from:
   - calcined and anhydrous zeolites, facultatively exchanged with ammonium ions;
   - non-calcined damp zeolites prepared hydrothermally and containing ammonium-or alkylammonium counter-cations, in the facultative presence of ammonium- or alkylammonium hydroxides, and having a pore diameter of from 0,5 nm to 1,3 nm,
   with an aqueous solution of oligomeric silica and an alkylammonium hydroxide, the percentage by weight of the zeolite in said slurry being from 20% to 50%, the molar ratio of oligomeric silica to alkylammonium hydroxide in said solution being from 0,05 to 0,2, and the molar ratio of the oligomeric silica to water being from 0,025 to 0,0125, and
   (b) rapidly drying the resultant mixture,
   characterized in that a zeolite based on:
   1) Si, Al and B;
   2) Si, Al and Ti;
   3) Si, Ti and Fe;
   4) Si and Ti;
   5) Si and B;
   6) Zeolite ZSM-5;
   7) Zeolite ZSM-11, and
   8) Zeolite T,
   is used, in which the weight ratio of the oligomeric silica to the zeolite in the mixture resultant from stage (a) is from 5:95 to 20:80, the 5:95 to 10;90 range being excluded in the case of a Si- and Ti-based zeolite.

2. Process according to Claim 1, wherein the zeolite based on Si, Al and B has, in its anhydrous and calcined state, the following molar composition:

$$pHAlO_2 . qB_2O_3 . SiO_2 \quad (1)$$

in which p is from 0,034 to 0,0050, and q is from 0,1 to 0,005, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HAlO_2$ being at least partially replaceable by cations, said zeolite (1) having, in its powdered state an X-ray diffraction spectrum with the following characteristics:

| Interplanar distance, nm | Rel.Intensity |
|---|---|
| $1{,}112 \pm 0{,}01$ | very strong |
| $0{,}998 \pm 0{,}01$ | strong |
| $0{,}974 \pm 0{,}01$ | medium |
| $0{,}634 \pm 0{,}007$ | medium to weak |
| $0{,}597 \pm 0{,}007$ | medium to weak |
| $0{,}424 \pm 0{,}005$ | medium to weak |
| $0{,}384 \pm 0{,}004$ | strong |
| $0{,}381 \pm 0{,}004$ | strong |
| $0{,}373 \pm 0{,}004$ | strong |
| $0{,}371 \pm 0{,}004$ | strong |
| $0{,}363 \pm 0{,}004$ | medium |
| $0{,}304 \pm 0{,}002$ | medium to weak |
| $0{,}297 \pm 0{,}002$ | medium to weak |

and an Infra Red spectrum exhibiting all the following bands:

| Wave number, $cm^{-1}$ | Rel.Intensity |
|---|---|
| 1220 to 1230 | weak |
| 1080 to 1110 | strong |
| 890 to 920 | medium to weak |
| 795 to 805 | medium to weak |
| 550 to 560 | medium |
| 450 to 470 | medium to strong. |

3. Process according to Claim 1, wherein the zeolite based on Si, Al and Ti has, in its anhydrous and calcined state, the following molar composition:

$$pHAlO_2 \cdot qTiO_2 \cdot SiO_2 \quad (2)$$

in which $\underline{p}$ is up to 0,050, and $\underline{q}$ is up to 0,025, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HAlO_2$ being at least partially replaceable by cations, said zeolite (2) having, in its powdered state an X-ray diffraction spectrum with the following characteristics:

| Interplanar distance, nm | Rel.Intensity |
|---|---|
| 1,114 ± 0,01 | very strong |
| 0,999 ± 0,01 | strong |
| 0,974 ± 0,01 | medium |
| 0,636 ± 0,007 | medium to weak |
| 0,599 ± 0,007 | medium to weak |
| 0,426 ± 0,005 | medium to weak |
| 0,386 ± 0,004 | strong |
| 0,382 ± 0,004 | strong |
| 0,375 ± 0,004 | strong |
| 0,372 ± 0,004 | strong |
| 0,365 ± 0,004 | medium |
| 0,305 ± 0,002 | medium to weak |
| 0,299 ± 0,002 | medium to weak |

and an Infra Red spectrum exhibiting all the following bands:

| Wave number, cm$^{-1}$ | Rel.Intensity |
|---|---|
| 1220 to 1230 | weak |
| 1080 to 1110 | strong |
| 960 to 975 | medium to weak |
| 795 to 805 | medium to weak |
| 550 to 560 | medium |
| 450 to 470 | medium to strong. |

4. Process according to Claim 1, wherein the zeolite based on Si and Ti has, in its anhydrous and calcined state, the following molar composition:

$$x TiO_2 \cdot (1-x) SiO_2 \qquad (3)$$

wherein x is from 0,0005 to 0,004, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%.

5. Process according to Claim 1, wherein the zeolite based on Si, Ti and Fe has, in its anhydrous and calcined state, the following molar composition:

$$p HFeO_2 \cdot q TiO_2 \cdot SiO_2 \qquad (4)$$

in which p is up to 0,050, and q is up to 0,025, with the proviso that, for an ammonium-base containing zeolite hydrate, the ratio of the weight of the water to the sum of the weights of the water, the ammonium ion or the alkylammonium base and the calcined and anhydrous zeolite (4) is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HFeO_2$ being at least partially replaceable by cations, said zeolite (1) having, in its powdered state an X-ray diffraction spectrum with the following characteristics:

# EP 0 265 018 B1

| Interplanar distance, nm | Rel.Intensity |
|---|---|
| $1{,}114 \pm 0{,}01$ | very strong |
| $0{,}999 \pm 0{,}01$ | strong |
| $0{,}974 \pm 0{,}01$ | medium |
| $0{,}636 \pm 0{,}007$ | medium to weak |
| $0{,}599 \pm 0{,}007$ | medium to weak |
| $0{,}426 \pm 0{,}005$ | medium to weak |
| $0{,}386 \pm 0{,}004$ | strong |
| $0{,}382 \pm 0{,}004$ | strong |
| $0{,}375 \pm 0{,}004$ | strong |
| $0{,}372 \pm 0{,}004$ | strong |
| $0{,}365 \pm 0{,}004$ | medium |
| $0{,}305 \pm 0{,}002$ | medium to weak |
| $0{,}299 \pm 0{,}002$ | medium to weak |

and an Infra Red spectrum exhibiting all the following bands:

| Wave number, $cm^{-1}$ | Rel.Intensity |
|---|---|
| 1220 to 1230 | weak |
| 1080 to 1110 | strong |
| 960 to 975 | medium to weak |
| 795 to 805 | medium to weak |
| 550 to 560 | medium |
| 450 to 470 | medium to strong. |

6. Process according to Claim 1, wherein the aqueous solution of silica and alkylammonium hydroxide is prepared by hydrolyzing a tetraalkyl orthosilicate in an aqueous solution of an alkylamonium hydroxide at a temperature of from 2°C 120°C for a time of from 0,2 h to 24 h.

7. Process according to Claim 6, wherein the tetraalkyl orthosilicate is tetraethyl orthosilicate.

8. Process according to Claim 1, wherein the alkyl in the alkylammonium hydroxide is a $C_1$-$C_5$ alkyl.

9. Process according to Claim 8, wherein the alkyl in the alkylammonium hydroxide is tetrapropyl.

10. A zeolite bonded with oligomeric silica, characterized in that the crystals of a zeolite based on:
  1) Si, Al and B;
  2) Si, Al and Ti;
  3) Si, Ti and Fe;
  4) Si and Ti;
  5) Si and B;
  6) Zeolite ZSM-5;
  7) Zeolite ZSM-11, and
  8) Zeolite T,
are encaged with each other by Si-O-Si bridges and are in the form of microspheres having a diameter of from 5 $\mu$m to 1 mm, the weight ratio of the oligomeric silica to the zeolite concerned in the mixture of an aqueous slurry of said zeolite with an aqueous solution of oligomeric silica and alkylammonium hydroxide used for their preparation being from 5:95 to 20:80, the 5:95 to 10:90 range being excluded in the case of an Si- and Ti-based zeolite.

**Claims for the following Contracting State : ES**

1. A process for preparing zeolites bonded with oligomeric silica, comprising the steps of:
  (a) mixing an aqueous slurry of:

15

a zeolite selected from:
- calcined and anhydrous zeolites, facultatively exchanged with ammonium ions;
- non-calcined damp zeolites prepared hydrothermally and containing ammonium-or alkylammonium counter-cations, in the facultative presence of ammonium- or alkylammonium hydroxides, and having a pore diameter of from 0,5 nm to 1,3 nm,
with an aqueous solution of oligomeric silica and an alkylammonium hydroxide, the percentage by weight of the zeolite in said slurry being from 20% to 50%, the molar ratio of oligomeric silica to alkylammonium hydroxide in said solution being from 0,05 to 0,2, and the molar ratio of the oligomeric silica to water being from 0,025 to 0,0125, and

(b) rapidly drying the resultant mixture,
characterized in that a zeolite based on:
1) Si, Al and B;
2) Si, Al and Ti;
3) Si, Ti and Fe;
4) Si and Ti;
5) Si and B;
6) Zeolite ZSM-5;
7) Zeolite ZSM-11, and
8) Zeolite T,
is used, in which the weight ratio of the oligomeric silica to the zeolite in the mixture resultant from stage (a) is from 5:95 to 20:80, the 5:95 to 10;90 range being excluded in the case of a Si- and Ti-based zeolite.

2. Process according to Claim 1, characterized in that the zeolite based on Si, Al and B has, in its anhydrous and calcined state, the following molar composition:

$$pHAlO_2 . qB_2O_3 . SiO_2 \qquad (1)$$

in which $p$ is from 0,034 to 0,0050, and $q$ is from 0,1 to 0,005, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HAlO_2$ being at least partially replaceable by cations, said zeolite (1) having, in its powdered state an X-ray diffraction spectrum with the following characteristics:

| Interplanar distance, nm | Rel.Intensity |
|---|---|
| 1,112 ± 0,01 | very strong |
| 0,998 ± 0,01 | strong |
| 0,974 ± 0,01 | medium |
| 0,634 ± 0,007 | medium to weak |
| 0,597 ± 0,007 | medium to weak |
| 0,424 ± 0,005 | medium to weak |
| 0,384 ± 0,004 | strong |
| 0,381 ± 0,004 | strong |
| 0,373 ± 0,004 | strong |
| 0,371 ± 0,004 | strong |
| 0,363 ± 0,004 | medium |
| 0,304 ± 0,002 | medium to weak |
| 0,297 ± 0,002 | medium to weak |

and an Infra Red spectrum exhibiting all the following bands:

| Wave number, cm$^{-1}$ | Rel.Intensity |
|---|---|
| 1220 to 1230 | weak |
| 1080 to 1110 | strong |
| 890 to 920 | medium to weak |
| 795 to 805 | medium to weak |
| 550 to 560 | medium |
| 450 to 470 | medium to strong. |

3. Process according to Claim 1, characterized in that the zeolite based on Si, Al and Ti has, in its anhydrous and calcined state, the following molar composition:

$$pHAlO_2 \cdot qTiO_2 \cdot SiO_2 \quad (2)$$

in which $p$ is up to 0,050, and $q$ is up to 0,025, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HAlO_2$ being at least partially replaceable by cations, said zeolite (2) having, in its powdered state an X-ray diffraction spectrum with the following characteristics:

| Interplanar distance, nm | Rel.Intensity |
|---|---|
| 1,114 ± 0,01 | very strong |
| 0,999 ± 0,01 | strong |
| 0,974 ± 0,01 | medium |
| 0,636 ± 0,007 | medium to weak |
| 0,599 ± 0,007 | medium to weak |
| 0,426 ± 0,005 | medium to weak |
| 0,386 ± 0,004 | strong |
| 0,382 ± 0,004 | strong |
| 0,375 ± 0,004 | strong |
| 0,372 ± 0,004 | strong |
| 0,365 ± 0,004 | medium |
| 0,305 ± 0,002 | medium to weak |
| 0,299 ± 0,002 | medium to weak |

and an Infra Red spectrum exhibiting all the following bands:

| Wave number, cm$^{-1}$ | Rel.Intensity |
|---|---|
| 1220 to 1230 | weak |
| 1080 to 1110 | strong |
| 960 to 975 | medium to weak |
| 795 to 805 | medium to weak |
| 550 to 560 | medium |
| 450 to 470 | medium to strong. |

4. Process according to Claim 1, characterized in that the zeolite based on Si and Ti has, in its anhydrous and calcined state, the following molar composition:

$$xTiO_2 \cdot (1-x) SiO_2 \quad (3)$$

17

characterized in that $\underline{x}$ is from 0,0005 to 0,004, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%.

5. Process according to Claim 1, characterized in that the zeolite based on Si, Ti and Fe has, in its anhydrous and calcined state, the following molar composition:

$$pHFeO_2 . qTiO_2 . SiO_2 \qquad (4)$$

in which $\underline{p}$ is up to 0,050, and $\underline{q}$ is up to 0,025, with the proviso that, for an ammonium-base containing zeolite hydrate, the ratio of the weight of the water to the sum of the weights of the water, the ammonium ion or the alkylammonium base and the calcined and anhydrous zeolite is from 23% to 28%, and the ratio of the weight of the ammonium ion or the alkylammonium base to the sum of the weights of the water, the ammonium ion or the alkylammonium base and the calcined and anhydrous zeolite is from 7% to 12%, the hydrogen ion of $HFeO_2$ being at least partially replaceable by cations, said zeolite (1) having, in its powdered state an X-ray diffraction spectrum with the following characteristics:

| Interplanar distance, nm | Rel.Intensity |
|---|---|
| $1,114 \pm 0,01$ | very strong |
| $0,999 \pm 0,01$ | strong |
| $0,974 \pm 0,01$ | medium |
| $0,636 \pm 0,007$ | medium to weak |
| $0,599 \pm 0,007$ | medium to weak |
| $0,426 \pm 0,005$ | medium to weak |
| $0,386 \pm 0,004$ | strong |
| $0,382 \pm 0,004$ | strong |
| $0,375 \pm 0,004$ | strong |
| $0,372 \pm 0,004$ | strong |
| $0,365 \pm 0,004$ | medium |
| $0,305 \pm 0,002$ | medium to weak |
| $0,299 \pm 0,002$ | medium to weak |

and an Infra Red spectrum exhibiting all the following bands:

| Wave number, $cm^{-1}$ | Rel.Intensity |
|---|---|
| 1220 to 1230 | weak |
| 1080 to 1110 | strong |
| 960 to 975 | medium to weak |
| 795 to 805 | medium to weak |
| 550 to 560 | medium |
| 450 to 470 | medium to strong. |

6. Process according to Claim 1, characterized in that the aqueous solution of silica and alkylammonium hydroxide is prepared by hydrolyzing a tetraalkyl orthosilicate in an aqueous solution of an alkylamonium hydroxide at a temperature of from 2°C 120°C for a time of from 0,2 h to 24 h.

7. Process according to Claim 6, characterized in that the tetraalkyl orthosilicate is tetraethyl orthosilicate.

8. Process according to Claim 1, characterized in that the alkyl in the alkylammonium hydroxide is a $C_1$-$C_5$ alkyl.

EP 0 265 018 B1

**9.** Process according to Claim 8, characterized in that the alkyl in the alkylammonium hydroxide is tetrapropyl.

**Patentansprüche**

**Patentansprüche für folgende Vertragsstaaten : AT, BE, CH, DE, FR, GB, GR, LI, LU, NL, SE**

**1.** Verfahren zur Herstellung von mit oligomerer Kieselsäure gebundenen Zeoliten, umfassend die Stufen:
(a) Vermischen einer wäßrigen Aufschlämmung von
einem Zeolit, ausgewählt aus:

- calcinierten und wasserfreien Zeoliten mit gegebenenfalls durch Ionenaustausch eingebauten Ammoniumionen,
- nicht calcinierten feuchten Zeoliten, die hydrothermisch hergestellt worden sind und Ammonium- oder Alkylammonium-Gegenkationen enthalten, falkultativ in Gegenwart von Ammonium- oder Alkylammonium-hydroxiden und die einen Porendurchmesser von 0,5 nm bis 1,3 nm aufweisen,
mit einer wäßrigen Lösung von oligomerer Kieselsäure und einem Alkylammonium-hydroxid, wobei der gewichtsmäßige Prozentgehalt des Zeolits in der Aufschlämmung 20 bis 50% beträgt, das Molverhältnis von oligomerer Kieselsäure zu Alkylammonium-hydroxid in der Lösung 0,05 bis 0,2 beträgt und das Molverhältnis von oligomerer Kieselsäure zu Wasser 0,025 bis 0,0125, und
(b) schnelles Trocknen des erhaltenen Gemisches,
dadurch gekennzeichnet, daß ein Zeolit verwendet wird auf der Basis von:
1) Si, Al und B,
2) Si, Al und Ti,
3) Si, Ti und Fe,
4) Si und Ti,
5) Si und B,
6) Zeolit ZSM-5,
7) Zeolit ZSM-11 und
8) Zeolit T,
wobei das Gewichtsverhältnis der oligomeren Kieselsäure zu dem Zeolit in dem in Stufe (a) entstehenden Gemisch 5:95 bis 20:80 beträgt, wobei der Bereich von 5:95 bis 10:90 im Falle eines Zeolits auf Si- und Ti-Basis ausGeschlossen ist.

**2.** Verfahren nach Anspruch 1, wobei der Zeolit auf Si-, Al- und B-Basis in seiner wasserfreien und calcinierten Form die folgende molare Zusammensetzung besitzt:

$$pHAlO_2 . qB_2O_3 . SiO_2 \qquad (1)$$

wobei p 0,034 bis 0,0050 und q 0,1 bis 0,005 beträgt, mit der Maßgabe, daß für ein eine Ammoniumbase enthaltendes Zeolithydrat das Gewichtsverhältnis von Wasser zu der Summe des Gewichts des Wassers, des Ammoniumions oder der Alkylammoniumbase und des calcinierten und wasserfreien Zeolits 23 bis 28% beträgt und das Gewichtsverhältnis des Ammoniumions oder der Alkylammoniumbase zur Summe der Gewichte von Wasser, Ammoniumion oder Alkylammoniumbase und dem calcinierten und wasserfreien Zeolit 7 bis 12% beträgt, das Wasserstoffion von $HAlO_2$ mindestens teilweise durch Kationen ersetzt ist, der Zeolit (1) in Pulverform ein Röntgenbeugungsspektrum mit den folgenden Charakteristika aufweist:

19

| Schichtabstand, nm | relative Intensität |
|---|---|
| 1,112 ± 0,01 | sehr stark |
| 0,998 ± 0,01 | stark |
| 0,974 ± 0,01 | mittel |
| 0,634 ± 0,007 | mittel bis schwach |
| 0,597 ± 0,007 | mittel bis schwach |
| 0,424 ± 0,005 | mittel bis schwach |
| 0,384 ± 0,004 | stark |
| 0,381 ± 0,004 | stark |
| 0,373 ± 0,004 | stark |
| 0,371 ± 0,004 | stark |
| 0,363 ± 0,004 | mittel |
| 0,304 ± 0,002 | mittel bis schwach |
| 0,297 ± 0,002 | mittel bis schwach |

und ein Infrarotspektrum mit den folgenden Banden:

| Wellenzahl, $cm^{-1}$ | relative Intensität |
|---|---|
| 1220 bis 1230 | schwach |
| 1080 bis 1110 | stark |
| 890 bis 920 | mittel bis schwach |
| 795 bis 805 | mittel bis schwach |
| 550 bis 560 | mittel |
| 450 bis 470 | mittel bis stark. |

**3.** Verfahren nach Anspruch 1, wobei der Zeolit auf der Basis Si, Al und Ti in wasserfreier calcinierter Form die folgende molare Zusammensetzung besitzt:

$$pHAlO_2 \cdot qTiO_2 \cdot SiO_2 \qquad (2)$$

wobei p bis zu 0,050 und q bis zu 0,025 ist, mit der Maßgabe, daß bei einem eine Ammoniumbase enthaltenden Zeolithydrat das Gewichtsverhältnis von Wasser zur Summe der Gewichte von Wasser, Ammoniumion oder Alkylammoniumbase und calciniertem und wasserfreiem Zeolit 23 bis 28% beträgt und das Gewichtsverhältnis von Ammoniumion oder Alkylammoniumbase zur Summe der Gewichte von Wasser, Ammoniumion oder Alkylammoniumbase und calciniertem und wasserfreiem Zeolit 7 bis 12% beträgt, wobei das Wasserstoffion von $HAlO_2$ mindestens teilweise ersetzt ist durch Kationen und der Zeolit (2) in Pulverform ein Röntgenbeugungsspektrum mit den folgenden Charakteristika besitzt:

| Schichtabstand, nm | relative Intensität |
|---|---|
| 1,114 ± 0,01 | sehr stark |
| 0,999 ± 0,01 | stark |
| 0,974 ± 0,01 | mittel |
| 0,636 ± 0,007 | mittel bis schwach |
| 0,599 ± 0,007 | mittel bis schwach |
| 0,426 ± 0,005 | mittel bis schwach |
| 0,386 ± 0,004 | stark |
| 0,382 ± 0,004 | stark |
| 0,375 ± 0,004 | stark |
| 0,372 ± 0,004 | stark |
| 0,365 ± 0,004 | mittel |
| 0,305 ± 0,002 | mittel bis schwach |
| 0,299 ± 0,002 | mittel bis schwach |

EP 0 265 018 B1

und ein Infrarotspektrum mit den folgenden Banden:

| Wellenzahl, $cm^{-1}$ | relative Intensität |
|---|---|
| 1220 bis 1230 | schwach |
| 1080 bis 1110 | stark |
| 960 bis 975 | mittel bis schwach |
| 795 bis 805 | mittel bis schwach |
| 550 bis 560 | mittel |
| 450 bis 470 | mittel bis stark. |

4. Verfahren nach Anspruch 1, wobei der Zeolit auf Si- und Ti-Basis in wasserfreier und calcinierter Form die folgende molare Zusammensetzung hat:

$$xTiO_2 . (1-x) SiO_2 \qquad (3)$$

wobei x 0,0005 bis 0,004 ist, mit der Maßgabe, daß für ein eine Ammoniumbase enthaltendes Zeolithydrat das Gewichtsverhältnis von Wasser zur Summe der Gewichte von Wasser, Ammoniumion oder Alkylammoniumbase und dem calcinierten wasserfreien Zeolit 23 bis 28% beträgt und das Gewichtsverhältnis von Ammoniumion oder Alkylammoniumbase zur Summe von Wasser, Ammoniumion oder Alkylammoniumbase und calciniertem wasserfreiem Zeolit 7 bis 12% beträgt.

5. Verfahren nach Anspruch 1, wobei der Zeolit auf Si-, Ti- und Fe-Basis in wasserfreier und calcinierter Form die folgende molare Zusammensetzung besitzt:

$$pHFeO_2 . qTiO_2 . SiO_2 \qquad (4)$$

wobei p bis zu 0,050 und q bis zu 0,025 ist, mit der Maßgabe, daß bei einem eine Ammoniumbase enthaltenden Zeolithydrat das Gewichtsverhältnis von Wasser zur Summe der Gewichte von Wasser und Ammoniumion oder Alkylammoniumbase und calciniertem wasserfreiem Zeolit (4) 23 bis 28% beträgt und das Gewichtsverhältnis von Ammoniumion oder Alkylammoniumbase zur Summe der Gewichte von Wasser, Ammoniumion oder Alkylammoniumbase und calciniertem wasserfreiem Zeolit 7 bis 12% beträgt, wobei das Wasserstoffion von $HFeO_2$ mindestens teilweise durch Kationen ersetzt ist, und der Zeolit (4) in Pulverform ein Röntgenbeugungsspektrum mit den folgenden Charakteristika besitzt:

| Schichtabstand, nm | relative Intensität |
|---|---|
| 1,114 ± 0,01 | sehr stark |
| 0,999 ± 0,01 | stark |
| 0,974 ± 0,01 | mittel |
| 0,636 ± 0,007 | mittel bis schwach |
| 0,599 ± 0,007 | mittel bis schwach |
| 0,426 ± 0,005 | mittel bis schwach |
| 0,386 ± 0,004 | stark |
| 0,382 ± 0,004 | stark |
| 0,375 ± 0,004 | stark |
| 0,372 ± 0,004 | stark |
| 0,365 ± 0,004 | mittel |
| 0,305 ± 0,002 | mittel bis schwach |
| 0,299 ± 0,002 | mittel bis schwach |

und ein Infrarotspektrum mit den folgenden Banden:

21

| Wellenzahl, cm$^{-1}$ | relative Intensität |
|---|---|
| 1220 bis 1230 | schwach |
| 1080 bis 1110 | stark |
| 960 bis 975 | mittel bis schwach |
| 795 bis 805 | mittel bis schwach |
| 550 bis 560 | mittel |
| 450 bis 470 | mittel bis stark. |

6. Verfahren nach Anspruch 1, wobei die wäßrige Lösung von Kieselsäure und Alkylammonium-hydroxid hergestellt wird durch Hydrolysieren eines Tetraalkyl-orthosilicats in einer wäßrigen Lösung eines Alkylammonium-hydroxids bei einer Temperatur von 2 bis 120°C während eines Zeitraum von 0,2 bis 24 h.

7. Verfahren nach Anspruch 6, wobei das Tetraalkyl-orthosilicat Tetraethyl-orthosilicat ist.

8. Verfahren nach Anspruch 1, wobei das Alkyl in dem Alkylammonium-hydroxid ein $C_1$-$C_5$-Alkyl ist.

9. Verfahren nach Anspruch 8, wobei das Alkyl in dem Alkylammonium-hydroxid Tetrapropyl ist.

10. Mit oligomerer Kieselsäure gebundener Zeolit, gekennzeichnet dadurch, daß die Kristalle eines Zeolits auf der Basis von
    1) Si, Al und B,
    2) Si, Al und Ti,
    3) Si, Ti und Fe,
    4) Si und Ti,
    5) Si und B,
    6) Zeolit ZSM-5,
    7) Zeolit ZSM-11 und
    8) Zeolit T,
    sich in einem Käfig mit anderen Si-O-Si-Brücken befinden und in Form von Mikrokugeln mit einem Durchmesser von 5 $\mu$m bis 1 mm vorliegen, wobei das Gewichtsverhältnis der oligomeren Kieselsäure zu dem betreffenden Zeolit in dem Gemisch einer wäßrigen Aufschlämmung des Zeolits mit einer wäßrigen Lösung von oligomerer Kieselsäure und Alkylammonium-hydroxid, die zu ihrer Herstellung angewandt wird, 5:95 bis 20:80 beträgt, wobei der Bereich 5:95 bis 10:90 im Falle eines Zeolits auf Si- und Ti-Basis ausgeschlossen ist.

**Patentansprüche für folgenden Vertragsstaat : ES**

1. Verfahren zur Herstellung von mit oligomerer Kieselsäure gebundenen Zeoliten, umfassend die Stufen:
    (a) Vermischen einer wäßrigen Aufschlämmung von
    einem Zeolit, ausgewählt aus:
    - calcinierten und wasserfreien Zeoliten mit gegebenenfalls durch Ionenaustausch eingebauten Ammoniumionen,
    - nicht calcinierten feuchten Zeoliten, die hydrothermisch hergestellt worden sind und Ammonium- oder Alkylammonium-Gegenkationen enthalten, falkultativ in Gegenwart von Ammonium- oder Alkylammonium-hydroxiden und die einen Porendurchmesser von 0,5 nm bis 1,3 nm aufweisen,
    mit einer wäßrigen Lösung von oligomerer Kieselsäure und einem Alkylammonium-hydroxid, wobei der gewichtsmäßige Prozentgehalt des Zeolits in der Aufschlämmung 20 bis 50% beträgt, das Molverhältnis von oligomerer Kieselsäure zu Alkylammonium-hydroxid in der Lösung 0,05 bis 0,2 beträgt und das Molverhältnis von oligomerer Kieselsäure zu Wasser 0,025 bis 0,0125, und
    (b) schnelles Trocknen des erhaltenen Gemisches,
    dadurch gekennzeichnet, daß ein Zeolit verwendet wird auf der Basis von:
    1) Si, Al und B,
    2) Si, Al und Ti,

3) Si, Ti und Fe,
4) Si und Ti,
5) Si und B,
6) Zeolit ZSM-5,
7) Zeolit ZSM-11 und
8) Zeolit T,

wobei das Gewichtsverhältnis der oligomeren Kieselsäure zu dem Zeolit in dem in Stufe (a) entstehenden Gemisch 5:95 bis 20:80 beträgt, wobei der Bereich von 5:95 bis 10:90 im Falle eines Zeolits auf Si- und Ti-Basis ausgeschlossen ist.

2. Verfahren nach Anspruch 1, dadurch gekennzeichnet, daß der Zeolit auf Si-, Al- und B-Basis in seiner wasserfreien und calcinierten Form die folgende molare Zusammensetzung besitzt:

$$pHAlO_2 \cdot qB_2O_3 \cdot SiO_2 \qquad (1)$$

wobei p 0,034 bis 0,0050 und q 0,1 bis 0,005 beträgt, mit der Maßgabe, daß für ein eine Ammoniumbase enthaltendes Zeolithydrat das Gewichtsverhältnis von Wasser zu der Summe des Gewichts des Wassers, des Ammoniumions oder der Alkylammoniumbase und des calcinierten und wasserfreien Zeolits 23 bis 28% beträgt und das Gewichtsverhältnis des Ammoniumions oder der Alkylammoniumbase zur Summe der Gewichte von Wasser, Ammoniumion oder Alkylammoniumbase und dem calcinierten und wasserfreien Zeolit 7 bis 12% beträgt, das Wasserstoffion von $HAlO_2$ mindestens teilweise durch Kationen ersetzt ist, der Zeolit (1) in Pulverform ein Röntgenbeugungsspektrum mit den folgenden Charakteristika aufweist:

| Schichtabstand, nm | relative Intensität |
|---|---|
| 1,112 ± 0,01 | sehr stark |
| 0,998 ± 0,01 | stark |
| 0,974 ± 0,01 | mittel |
| 0,634 ± 0,007 | mittel bis schwach |
| 0,597 ± 0,007 | mittel bis schwach |
| 0,424 ± 0,005 | mittel bis schwach |
| 0,384 ± 0,004 | stark |
| 0,381 ± 0,004 | stark |
| 0,373 ± 0,004 | stark |
| 0,371 ± 0,004 | stark |
| 0,363 ± 0,004 | mittel |
| 0,304 ± 0,002 | mittel bis schwach |
| 0,297 ± 0,002 | mittel bis schwach |

und ein Infrarotspektrum mit den folgenden Banden:

| Wellenzahl, $cm^{-1}$ | relative Intensität |
|---|---|
| 1220 bis 1230 | schwach |
| 1080 bis 1110 | stark |
| 890 bis 920 | mittel bis schwach |
| 795 bis 805 | mittel bis schwach |
| 550 bis 560 | mittel |
| 450 bis 470 | mittel bis stark. |

3. Verfahren nach Anspruch 1, dadurch gekennzeichnet, daß der Zeolit auf der Basis Si, Al und Ti in wasserfreier calcinierter Form die folgende molare Zusammensetzung besitzt:

$$pHAlO_2 \cdot qTiO_2 \cdot SiO_2 \qquad (2)$$

wobei p bis zu 0,050 und q bis zu 0,025 ist, mit der Maßgabe, daß bei einem eine Ammoniumbase enthaltenden Zeolithydrat das Gewichtsverhältnis von Wasser zur Summe der Gewichte von Wasser, Ammoniumion oder Alkylammoniumbase und calciniertem und wasserfreiem Zeolit 23 bis 28% beträgt und das Gewichtsverhältnis von Ammoniumion oder Alkylammoniumbase zur Summe der Gewichte von Wasser, Ammoniumion oder Alkylammoniumbase und calciniertem und wasserfreiem Zeolit 7 bis 12% beträgt, wobei das Wasserstoffion von $HAlO_2$ mindestens teilweise ersetzt ist durch Kationen und der Zeolit (2) in Pulverform ein Röntgenbeugungsspektrum mit den folgenden Charakteristika besitzt:

| Schichtabstand, nm | relative Intensität |
| --- | --- |
| $1,114 \pm 0,01$ | sehr stark |
| $0,999 \pm 0,01$ | stark |
| $0,974 \pm 0,01$ | mittel |
| $0,636 \pm 0,007$ | mittel bis schwach |
| $0,599 \pm 0,007$ | mittel bis schwach |
| $0,426 \pm 0,005$ | mittel bis schwach |
| $0,386 \pm 0,004$ | stark |
| $0,382 \pm 0,004$ | stark |
| $0,375 \pm 0,004$ | stark |
| $0,372 \pm 0,004$ | stark |
| $0,365 \pm 0,004$ | mittel |
| $0,305 \pm 0,002$ | mittel bis schwach |
| $0,299 \pm 0,002$ | mittel bis schwach |

und ein Infrarotspektrum mit den folgenden Banden:

| Wellenzahl, $cm^{-1}$ | relative Intensität |
| --- | --- |
| 1220 bis 1230 | schwach |
| 1080 bis 1110 | stark |
| 960 bis 975 | mittel bis schwach |
| 795 bis 805 | mittel bis schwach |
| 550 bis 560 | mittel |
| 450 bis 470 | mittel bis stark. |

4. Verfahren nach Anspruch 1, dadurch gekennzeichnet, daß der Zeolit auf Si- und Ti-Basis in wasserfreier und calcinierter Form die folgende molare Zusammensetzung hat:

$$xTiO_2 \cdot (1-x) \, SiO_2 \qquad (3)$$

wobei x 0,0005 bis 0,004 ist, mit der Maßgabe, daß für ein eine Ammoniumbase enthaltendes Zeolithydrat das Gewichtsverhältnis von Wasser zur Summe der Gewichte von Wasser, Ammoniumion oder Alkylammoniumbase und dem calcinierten wasserfreien Zeolit 23 bis 28% beträgt und das Gewichtsverhältnis von Ammoniumion oder Alkylammoniumbase zur Summe von Wasser, Ammoniumion oder Alkylammoniumbase und calciniertem wasserfreiem Zeolit 7 bis 12% beträgt.

5. Verfahren nach Anspruch 1, dadurch gekennzeichnet, daß der Zeolit auf Si-, Ti- und Fe-Basis in wasserfreier und calcinierter Form die folgende molare Zusammensetzung besitzt:

$$pHFeO_2 \cdot qTiO_2 \cdot SiO_2 \qquad (4)$$

wobei p bis zu 0,050 und q bis zu 0,025 ist, mit der Maßgabe, daß bei einem eine Ammoniumbase enthaltenden Zeolithydrat das Gewichtsverhältnis von Wasser zur Summe der Gewichte von Wasser und Ammoniumion oder Alkylammoniumbase und calciniertem wasserfreiem Zeolit (4) 23 bis 28% beträgt und das Gewichtsverhältnis von Ammoniumion oder Alkylammoniumbase zur Summe der Gewichte von Wasser, Ammoniumion oder Alkylammoniumbase und calciniertem wasserfreim Zeolit 7

bis 12% beträgt, wobei das Wasserstoffion von $HFeO_2$ mindestens teilweise durch Kationen ersetzt ist, und der Zeolit (4) in Pulverform ein Röntgenbeugungsspektrum mit den folgenden Charakteristika besitzt:

| Schichtabstand, nm | relative Intensität |
|---|---|
| $1,114 \pm 0,01$ | sehr stark |
| $0,999 \pm 0,01$ | stark |
| $0,974 \pm 0,01$ | mittel |
| $0,636 \pm 0,007$ | mittel bis schwach |
| $0,599 \pm 0,007$ | mittel bis schwach |
| $0,426 \pm 0,005$ | mittel bis schwach |
| $0,386 \pm 0,004$ | stark |
| $0,382 \pm 0,004$ | stark |
| $0,375 \pm 0,004$ | stark |
| $0,372 \pm 0,004$ | stark |
| $0,365 \pm 0,004$ | mittel |
| $0,305 \pm 0,002$ | mittel bis schwach |
| $0,299 \pm 0,002$ | mittel bis schwach |

und ein Infrarotspektrum mit den folgenden Banden:

| Wellenzahl, $cm^{-1}$ | relative Intensität |
|---|---|
| 1220 bis 1230 | schwach |
| 1080 bis 1110 | stark |
| 960 bis 975 | mittel bis schwach |
| 795 bis 805 | mittel bis schwach |
| 550 bis 560 | mittel |
| 450 bis 470 | mittel bis stark. |

6. Verfahren nach Anspruch 1, dadurch gekennzeichnet, daß die wäßrige Lösung von Kieselsäure und Alkylammonium-hydroxid hergestellt wird durch Hydrolysieren eines Tetraalkyl-orthosilicats in einer wäßrigen Lösung eines Alkylammonium-hydroxids bei einer Temperatur von 2 bis 120°C während eines Zeitraum von 0,2 bis 24 h.

7. Verfahren nach Anspruch 6, dadurch gekennzeichnet, daß das Tetraalkyl-orthosilicat Tetraethyl-orthosilicat ist.

8. Verfahren nach Anspruch 1, dadurch gekennzeichnet, daß das Alkyl in dem Alkylammonium-hydroxid ein $C_1$-$C_5$-Alkyl ist.

9. Verfahren nach Anspruch 8, dadurch gekennzeichnet, daß das Alkyl in dem Alkylammonium-hydroxid Tetrapropyl ist.

**Revendications**

**Revendications pour les Etats contractants : AT, BE, CH, DE, FR, GB, GR, LI, LU, NL, SE**

1. Procédé de préparation de zéolites liées à de la silice oligomère, comprenant les étapes consistant à :
   (a) mélanger une suspension aqueuse de :
   une zéolite choisie parmi :
   - des zéolites calcinées et anhydres, ayant facultativement subi un échange avec des ions ammonium ;
   - des zéolites humides non calcinées, préparées par voie hydrothermique et contenant des contre-cations ammonium ou alkylammonium, facultativement en présence d'hydroxydes d'ammonium ou d'alkylammonium, et dont les pores présentent un diamètre de 0,5 nm à 1,3 nm,

avec une solution aqueuse de silice oligomère et d'un hydroxyde d'alkylammonium, le pourcentage pondéral de la zéolite dans ladite suspension valant de 20% à 50%, le rapport molaire de la silice oligomère à l'hydroxyde d'alkylammonium dans ladite solution valant de 0,05 à 0,2 et le rapport molaire de la silice oligomère à l'eau valant de 0,025 à 0,0125, et

(b) sécher rapidement le mélange résultant,

caractérisé en ce que l'on utilise une zéolite à base de :

1) Si, Al et B ;
2) Si, Al et Ti ;
3) Si, Ti et Fe ;
4) Si et Ti ;
5) Si et B ;
6) Zéolite ZSM-5 ;
7) Zéolite ZSM-11 ; et
8) Zéolite T,

le rapport pondéral de la silice oligomère à la zéolite, dans le mélange résultant de l'étape (a), valant de 5:95 à 20:80, l'intervalle allant de 5:95 à 10:90 étant exclu dans le cas d'une zéolite à base de Si et Ti.

2. Procédé conforme à la revendication 1, dans lequel la zéolite à base de Si, Al et B présente, à l'état calciné et anhydre, la composition molaire suivante :

$$pHAlO_2 . qB_2O_3 . SiO_2 \qquad (1)$$

dans laquelle p vaut de 0,034 à 0,0050 et q vaut de 0,1 à 0,005, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre vaille de 23 % a 28 %, et le rapport du poids de l'ion ammonium ou de la base alkylammonium à la somme des poids de l'eau, de l'ion ammonium ou de la base alkylammonium et de la zéolite calcinée et anhydre vaille de 7 a 12 %, l'ion hydrogène de $HAlO_2$ étant au moins partiellement remplaçable par des cations, ladite zéolite (1) présentant, à l'état de poudre, un spectre de diffraction des rayons X dont les caractéristiques sont les suivantes :

| Distance interplanaire, nm | Intensité relative |
|---|---|
| 1,112 ± 0,01 | très forte |
| 0,998 ± 0,01 | forte |
| 0,974 ± 0,01 | moyenne |
| 0,634 ± 0,007 | moyenne-faible |
| 0,597 ± 0,007 | moyenne-faible |
| 0,424 ± 0,005 | moyenne-faible |
| 0,384 ± 0,004 | forte |
| 0,381 ± 0,004 | forte |
| 0,373 ± 0,004 | forte |
| 0,371 ± 0,004 | forte |
| 0,363 ± 0,004 | moyenne |
| 0,304 ± 0,002 | moyenne-faible |
| 0,297 ± 0,002 | moyenne-faible |

et un spectre infrarouge présentant toutes les bandes suivantes :

| Nombre d'ondes, cm$^{-1}$ | Intensité relative |
|---|---|
| 1220 à 1230 | faible |
| 1080 à 1110 | forte |
| 890 à 920 | moyenne-faible |
| 795 à 805 | moyenne-faible |
| 550 à 560 | moyenne |
| 450 à 470 | moyenne-forte |

**3.** Procédé conforme à la revendication 1, dans lequel la zéolite à base de Si, Al et Ti présente, à l'état calciné et anhydre, la composition molaire suivante :

$$pHAlO_2 \cdot qTiO_2 \cdot SiO_2 \qquad (2)$$

dans laquelle p vaut jusqu'à 0,050 et q vaut jusqu'à 0,025, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre vaille de 23 % à 28 %, et le rapport du poids de l'ion ammonium ou de la base alkylammonium à la somme des poids de l'eau, de l'ion ammonium ou de la base alkylammonium et de la zéolite calcinée et anhydre vaille de 7 à 12 %, l'ion hydrogène de HAlO$_2$ étant au moins partiellement remplaçable par des cations, ladite zéolite (2) présentant, à l'état de poudre, un spectre de diffraction des rayons X dont les caractéristiques sont les suivantes :

| Distance interplanaire, nm | Intensité relative |
|---|---|
| 1,114 ± 0,01 | très forte |
| 0,999 ± 0,01 | forte |
| 0,974 ± 0,01 | moyenne |
| 0,636 ± 0,007 | moyenne-faible |
| 0,599 ± 0,007 | moyenne-faible |
| 0,426 ± 0,005 | moyenne-faible |
| 0,386 ± 0,004 | forte |
| 0,382 ± 0,004 | forte |
| 0,375 ± 0,004 | forte |
| 0,372 ± 0,004 | forte |
| 0,365 ± 0,004 | moyenne |
| 0,305 ± 0,002 | moyenne-faible |
| 0,299 ± 0,002 | moyenne-faible |

et un spectre infrarouge présentant toutes les bandes suivantes :

| Nombre d'ondes, cm$^{-1}$ | Intensité relative |
|---|---|
| 1220 à 1230 | faible |
| 1080 à 1110 | forte |
| 960 à 975 | moyenne-faible |
| 795 à 805 | moyenne-faible |
| 550 à 560 | moyenne |
| 450 à 470 | moyenne-forte |

**4.** Procédé conforme à la revendication 1, dans lequel la zéolite à base de Si et Ti présente, à l'état calciné et anhydre, la composition molaire suivante :

$$xTiO_2 \cdot (1-x) SiO_2 \qquad (3)$$

dans laquelle x vaut de 0,0005 à 0,004, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre vaille de 23 % à 28 %, et le rapport du poids de l'ion ammonium ou de la base alkylammonium à la somme des poids de l'eau, de l'ion ammonium ou de la base alkylammonium et de la zéolite calcinée et anhydre vaille de 7 à 12 %.

**5.** Procédé conforme à la revendication 1, dans lequel la zéolite à base de Si, Ti et Fe présente, à l'état calciné et anhydre, la composition molaire suivante :

$$pHFeO_2 \cdot qTiO_2 \cdot SiO_2 \qquad (4)$$

dans laquelle p vaut jusqu'à 0,050 et q vaut jusqu'à 0,025, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre (4) vaille de 23 % à 28 %, et le rapport du poids de l'ion ammonium ou de la base alkylammonium à la somme des poids de l'eau, de l'ion ammonium ou de la base alkylammonium et de la zéolite calcinée et anhydre vaille de 7 a 12 %, l'ion hydrogène de $HFeO_2$ étant au moins partiellement remplaçable par des cations, ladite zéolite (4) présentant, à l'état de poudre, un spectre de diffraction des rayons X dont les caractéristiques sont les suivantes :

| Distance interplanaire, nm | Intensité relative |
|---|---|
| $1,114 \pm 0,01$ | très forte |
| $0,999 \pm 0,01$ | forte |
| $0,974 \pm 0,01$ | moyenne |
| $0,636 \pm 0,007$ | moyenne-faible |
| $0,599 \pm 0,007$ | moyenne-faible |
| $0,426 \pm 0,005$ | moyenne-faible |
| $0,386 \pm 0,004$ | forte |
| $0,382 \pm 0,004$ | forte |
| $0,375 \pm 0,004$ | forte |
| $0,372 \pm 0,004$ | forte |
| $0,365 \pm 0,004$ | moyenne |
| $0,305 \pm 0,002$ | moyenne-faible |
| $0,299 \pm 0,002$ | moyenne-faible |

et un spectre infrarouge présentant toutes les bandes suivantes :

| Nombre d'ondes, $cm^{-1}$ | Intensité relative |
|---|---|
| 1220 à 1230 | faible |
| 1080 à 1110 | forte |
| 960 à 975 | moyenne-faible |
| 795 à 805 | moyenne-faible |
| 550 à 560 | moyenne |
| 450 à 470 | moyenne-forte |

**6.** Procédé conforme à la revendication 1, dans lequel la solution aqueuse de silice et d'hydroxyde d'alkylammonium est préparée par hydrolyse d'un orthosilicate de tétra-alkyle dans une solution aqueuse d'un hydroxyde d'alkylammonium, à une température valant de 2 °C à 120 °C, pendant de 0,2 h à 24 h.

**7.** Procédé conforme à la revendication 6, dans lequel l'orthosilicate de tétra-alkyle est de l'orthosilicate de tétraéthyle.

**8.** Procédé conforme à la revendication 1, dans lequel les groupes alkyle de l'hydroxyde d'alkylammonium sont des groupes alkyle en $C_1$-$C_5$.

9. Procédé conforme à la revendication 8, dans lequel les groupes alkyle de l'hydroxyde d'alkylammonium sont quatre groupes propyle.

10. Zéolite liée avec de la silice oligomère, caractérisée en ce que les cristaux d'une zéolite à base de :
    1) Si, Al et B ;
    2) Si, Al et Ti ;
    3) Si, Ti et Fe ;
    4) Si et Ti ;
    5) Si et B ;
    6) Zéolite ZSM-5 ;
    7) Zéolite ZSM-11; et
    8) Zéolite T,
sont encagés, les uns avec les autres, par des ponts Si-O-Si et se trouvent sous la forme de microsphères présentant un diamètre valant de 5 $\mu$m à 1 $\mu$m, le rapport pondéral de la silice oligomère à la zéolite concernée, dans le mélange d'une suspension aqueuse de ladite zéolite avec une solution aqueuse de silice oligomère et d'un hydroxyde d'alkylammonium utilisé pour leur préparation, valant de 5:95 à 20:80, l'intervalle allant de 5:95 à 10:90 étant exclu dans le cas d'une zéolite à base de Si et Ti.

**Revendications pour l'Etat contractant suivant : ES**

1. Procédé de préparation de zéolites liées à de la silice oligomère, comprenant les étapes consistant à :
    (a) mélanger une suspension aqueuse de :
    une zéolite choisie parmi :
    - des zéolites calcinées et anhydres, ayant facultativement subi un échange avec des ions ammonium ;
    - des zéolites humides non calcinées, préparées par voie hydrothermique et contenant des contre-cations ammonium ou alkylammonium, facultativement en présence d'hydroxydes d'ammonium ou d'alkylammonium, et dont les pores présentent un diamètre de 0,5 nm à 1,3 nm,
    avec une solution aqueuse de silice oligomère et d'un hydroxyde d'alkylammonium, le pourcentage pondéral de la zéolite dans ladite suspension valant de 20% a 50%, le rapport molaire de la silice oligomère a l'hydroxyde d'alkylammonium dans ladite solution valant de 0,05 à 0,2 et le rapport molaire de la silice oligomère à l'eau valant de 0,025 à 0,0125, et
    (b) sécher rapidement le mélange résultant,
    caractérisé en ce que l'on utilise une zéolite à base de :
    1) Si, Al et B ;
    2) Si, Al et Ti ;
    3) Si, Ti et Fe ;
    4) Si et Ti ;
    5) Si et B ;
    6) Zéolite ZSM-5 ;
    7) Zéolite ZSM-11 ; et
    8) Zéolite T,
    le rapport pondéral de la silice oligomère à la zéolite, dans le mélange résultant de l'étape (a), valant de 5:95 à 20:80, l'intervalle allant de 5:95 a 10:90 étant exclu dans le cas d'une zéolite à base de Si et Ti.

2. Procédé conforme à la revendication 1, caractérisé en ce que la zéolite a base de Si, Al et B présente, à l'état calciné et anhydre, la composition molaire suivante :

$$pHAlO_2 . qB_2O_3 . SiO_2 \qquad (1)$$

dans laquelle p vaut de 0,034 à 0,0050 et q vaut de 0,1 à 0,005, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre vaille de 23 % à 28 %, et le rapport du poids de l'ion ammonium ou de la base alkylammonium à la somme des poids de l'eau, de l'ion ammonium ou de la base alkylammonium et de la zéolite calcinée et anhydre vaille de 7 à 12 %, l'ion hydrogène de $HAlO_2$ étant au moins partiellement remplaçable par des cations, ladite zéolite (1) présentant, à l'état de poudre, un spectre de diffraction des rayons X dont les caractéristiques sont les suivantes :

| Distance interplanaire nm | Intensité relative |
|---|---|
| 1,112 ± 0,01 | très forte |
| 0,998 ± 0,01 | forte |
| 0,974 ± 0,01 | moyenne |
| 0,634 ± 0,007 | moyenne-faible |
| 0,597 ± 0,007 | moyenne-faible |
| 0,424 ± 0,005 | moyenne-faible |
| 0,384 ± 0,004 | forte |
| 0,381 ± 0,004 | forte |
| 0,373 ± 0,004 | forte |
| 0,371 ± 0,004 | forte |
| 0,363 ± 0,004 | moyenne |
| 0,304 ± 0,002 | moyenne-faible |
| 0,297 ± 0,002 | moyenne-faible |

et un spectre infrarouge présentant toutes les bandes suivantes :

| Nombre d'ondes, $cm^{-1}$ | Intensité relative |
|---|---|
| 1220 à 1230 | faible |
| 1080 à 1110 | forte |
| 890 à 920 | moyenne-faible |
| 795 à 805 | moyenne-faible |
| 550 à 560 | moyenne |
| 450 à 470 | moyenne-forte |

3. Procédé conforme à la revendication 1, caractérisé en ce que la zéolite à base de Si, Al et Ti présente, à l'état calciné et anhydre, la composition molaire suivante :

$$pHAlO_2 . qTiO_2 . SiO_2 \quad (2)$$

dans laquelle p vaut jusqu'à 0,050 et q vaut jusqu'à 0,025, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre vaille de 23 % à 28 %, et le rapport du poids de l'ion ammonium ou de la base alkylammonium à la somme des poids de l'eau, de l'ion ammonium ou de la base alkylammonium et de la zéolite calcinée et anhydre vaille de 7 à 12 %, l'ion hydrogène de $HAlO_2$ étant au moins partiellement remplaçable par des cations, ladite zéolite (2) présentant, à l'état de poudre, un spectre de diffraction des rayons X dont les caractéristiques sont les suivantes :

| Distance interplanaire, nm | Intensité relative |
|---|---|
| $1,114 \pm 0,01$ | très forte |
| $0,999 \pm 0,01$ | forte |
| $0,974 \pm 0,01$ | moyenne |
| $0,636 \pm 0,007$ | moyenne-faible |
| $0,599 \pm 0,007$ | moyenne-faible |
| $0,426 \pm 0,005$ | moyenne-faible |
| $0,386 \pm 0,004$ | forte |
| $0,382 \pm 0,004$ | forte |
| $0,375 \pm 0,004$ | forte |
| $0,372 \pm 0,004$ | forte |
| $0,365 \pm 0,004$ | moyenne |
| $0,305 \pm 0,002$ | moyenne-faible |
| $0,299 \pm 0,002$ | moyenne-faible |

et un spectre infrarouge présentant toutes les bandes suivantes :

| Nombre d'ondes, $cm^{-1}$ | Intensité relative |
|---|---|
| 1220 à 1230 | faible |
| 1080 à 1110 | forte |
| 960 à 975 | moyenne-faible |
| 795 à 805 | moyenne-faible |
| 550 à 560 | moyenne |
| 450 à 470 | moyenne-forte |

4. Procédé conforme à la revendication 1, caractérisé en ce que la zéolite à base de Si et Ti présente, à l'état calciné et anhydre, la composition molaire suivante :

$$x TiO_2 \ . \ (1\text{-}x) \ SiO_2 \qquad (3)$$

dans laquelle x vaut de 0,0005 à 0,004, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre vaille de 23 % à 28 %, et le rapport du poids de l'ion ammonium ou de la base alkylammonium à la somme des poids de l'eau, de l'ion ammonium ou de la base alkylammonium et de la zéolite calcinée et anhydre vaille de 7 à 12 %.

5. Procédé conforme à la revendication 1, caractérisé en ce que la zéolite à base de Si, Ti et Fe présente, à l'état calciné et anhydre, la composition molaire suivante :

$$p HFeO_2 \ . \ q TiO_2 \ . \ SiO_2 \qquad (4)$$

dans laquelle p vaut jusqu'à 0,050 et q vaut jusqu'à 0,025, avec la condition que, pour un hydrate de zéolite contenant une base ammonium, le rapport du poids de l'eau à la somme des poids de l'eau, de l'ion ammonium ou de la base alkylammonium et de la zéolite calcinée et anhydre vaille de 23 % à 28 %, et le rapport du poids de l'ion ammonium ou de la base alkylammonium a la somme des poids de l'eau, de l'ion ammonium ou de la base alkylammonium et de la zéolite calcinée et anhydre vaille de 7 à 12 %, l'ion hydrogène de $HFeO_2$ étant au moins partiellement remplaçable par des cations, ladite zéolite (4) présentant, à l'état de poudre, un spectre de diffraction des rayons X dont les caractéristiques sont les suivantes :

EP 0 265 018 B1

| Distance interplanaire, nm | Intensité relative |
|---|---|
| 1,114 ± 0,01 | très forte |
| 0,999 ± 0,01 | forte |
| 0,974 ± 0,01 | moyenne |
| 0,636 ± 0,007 | moyenne-faible |
| 0,599 ± 0,007 | moyenne-faible |
| 0,426 ± 0,005 | moyenne-faible |
| 0,386 ± 0,004 | forte |
| 0,382 ± 0,004 | forte |
| 0,375 ± 0,004 | forte |
| 0,372 ± 0,004 | forte |
| 0,365 ± 0,004 | moyenne |
| 0,305 ± 0,002 | moyenne-faible |
| 0,299 ± 0,002 | moyenne-faible |

et un spectre infrarouge présentant toutes les bandes suivantes :

| Nombre d'ondes, $cm^{-1}$ | Intensité relative |
|---|---|
| 1220 à 1230 | faible |
| 1080 à 1110 | forte |
| 960 à 975 | moyenne-faible |
| 795 à 805 | moyenne-faible |
| 550 à 560 | moyenne |
| 450 à 470 | moyenne-forte |

6. Procédé conforme à la revendication 1, caractérisé en ce que la solution aqueuse de silice et d'hydroxyde d'alkylammonium est préparée par hydrolyse d'un orthosilicate de tétra-alkyle dans une solution aqueuse d'un hydroxyde d'alkylammonium, a une température valant de 2°C a 120°C, pendant de 0,2 h à 24 h.

7. Procédé conforme à la revendication 6, caractérisé en ce que l'orthosilicate de tétra-alkyle est de l'orthosilicate de tétraéthyle.

8. Procédé conforme à la revendication 1, caractérisé en ce que les groupes alkyle de l'hydroxyde d'alkylammonium sont des groupes alkyle en $C_1$-$C_5$.

9. Procédé conforme à la revendication 8, caractérisé en ce que les groupes alkyle de l'hydroxyde d'alkylammonium sont quatre groupes propyle.

32